# EUROPÄISCHE PATENTANMELDUNG

(11) **EP 1 515 131 A1**
(43) Veröffentlichungstag der Anmeldung: **16.03.2005**
(21) Anmeldenummer: 04021196.3
(22) Anmeldetag: 07.09.2004
(51) Int. Cl.: G01N 15/14

(54) **Verfahren und Vorrichtung zur Lichtstreuung in einer Durchflusszelle**

(30) Priorität: 09.09.2003 DE 10341520
(71) Anmelder: Schupp, Wolfgang, Dr., 55437 Ober-Hilbersheim (DE)
(72) Erfinder: Schupp, Wolfgang, Dr., 55437 Ober-Hilbersheim (DE)
(74) Vertreter: Best, Michael, Dr.

(57) **Zusammenfassung**

Die Erfindung betrifft ein Verfahren zur Durchführung einer Durchflußlichtstreuung zur Bestimmung von Parametern von Teilchen in einem flüssigen Medium, bei dem Teilchen, die sich in einem flüssigen Medium in einer Durchflußzelle befinden, mit Licht bestrahlt werden und das von den Teilchen gestreute Licht gemessen und ausgewertet wird, dadurch gekennzeichnet, daß in der Durchflußzelle eine laminare Strömung eines flüssigen Mediums erzeugt wird, das die zu untersuchenden Teilchen nicht enthält, und die zu untersuchenden Teilchen an einer oder mehreren Stellen so in die laminare Strömung eingebracht werden, daß sie laminar durch die Durchflußzelle geführt werden.

## Beschreibung

Die vorliegende Erfindung betrifft ein Verfahren bzw. eine Vorrichtung zur Durchführung einer Lichtstreuung, insbesondere zur statischen Lichtstreuung (auch bekannt als "static light scattering" oder SLS) und zur zeitabhängigen statischen Lichtstreuung (auch bekannt als "time-dependent static light scattering" oder TDSLS) aber auch zur Durchführung anderer Arten der Lichtstreuung wie zur dynamischen Lichtstreuung oder TILS ("Totalintensitätslichtstreuung"). Bei dem erfindungsgemäßen Verfahren werden auf an sich bekannte Art und Weise durch Lichtstreuung Parameter von Teilchen bestimmt, wobei aber, anders als im Stand der Technik, in einer Durchflußlichtstreuzelle eine laminare Strömung aus einem flüssigen Medium erzeugt wird, das die zu untersuchenden Teilchen nicht enthält, und die zu untersuchenden Teilchen an einer oder mehreren Stellen in die laminare Strömung eingebracht und mit der laminaren Strömung (d.h. im wesentlichen laminar) durch die Durchflußzelle transportiert werden.

Verfahren zur Lichtstreuung sind bekannt und werden in Technik, Wissenschaft und Industrie in großem Maße angewendet. Insbesondere die statische Lichtstreuung ist die Methode der Wahl beispielsweise für die Bestimmung von Molekülgrößen wie durchschnittlichem Molekulargewicht und durchschnittlichem Gyrationsradius von Makromolekülen aber auch zur Bestimmung von mittleren Molekulargewichten und Molekulargewichtsverteilungen von Polymeren und zur Untersuchung von zeitabhängigen Prozessen wie von Polymerisationsverfahren, der Zersetzung von Makromolekülen und Aggregationsprozessen.

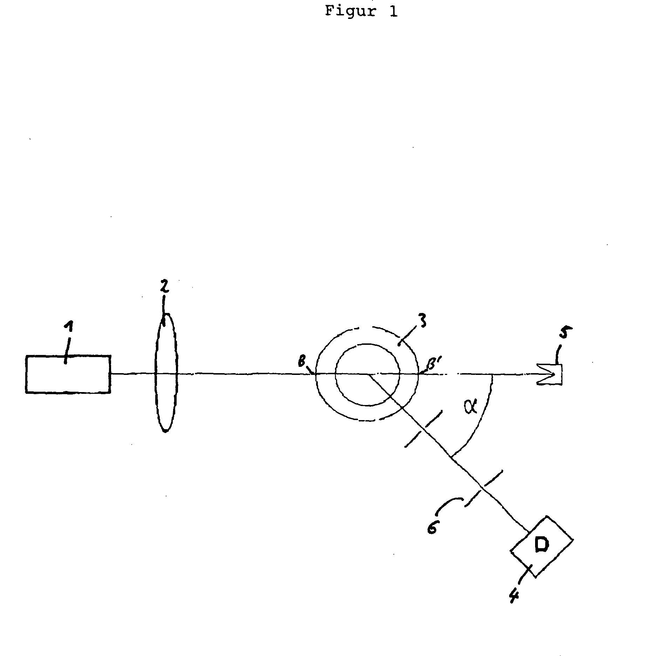

Eine Lichtstreuung erfolgt prinzipiell wie es in Figur 1 gezeigt wird. Eine geeignete Lichtquelle 1, die einen Strahl kohärentes Licht aussenden kann (häufig als "Primärstrahl" bezeichnet), üblicherweise ein Laser, emittiert einen Lichtstrahl, der durch eine Linse 2 in eine Meßzelle 3 fokussiert wird. In der Meßzelle 3 trifft der Lichtstrahl auf die zu messenden Teilchen, die das Licht streuen. Das gestreute Licht wird durch unterschiedliche räumliche Begrenzer 6 unter einem definierten Raumwinkel α auf lichtempfindliche Detektoren 4 geleitet. Der Primärstrahl wird von einem Strahlfänger (5) aufgefangen und vernichtet. Die Intensität des von den Teilchen gestreuten Lichts in Abhängigkeit der jeweiligen Streuwinkel liefert nach geeigneter Auswertung die gewünschten Informationen über die in der Meßzelle befindlichen Teilchen. Das Prinzip der Lichtstreuung ist beispielsweise in Pacel Kratochvil, "Classical Light Scattering from Polymer Solutions", Elsevier 1987 beschrieben, und auf dieses Standardwerk wird insoweit Bezug genommen.

Neben einer batchweisen Verfahrensführung, bei der Proben nacheinander in eine Meßzelle, beispielsweise eine Glasküvette eingeführt und vermessen werden, gewinnt zunehmend eine kontinuierliche Arbeitsweise an Bedeutung, bei der eine Durchflußzelle, die in der Regel aus durchsichtigem Glas ist, kontinuierlich von Probenmaterial durchflossen wird und die Lichtstreuung kontinuierlich an den durch die Durchflußzelle fließenden Teilchen erfolgt. Diese Vorgehensweise bietet sich insbesondere an, wenn die Lichtstreuung mit einem Trennverfahren, insbesondere einem chromatographischen Trennverfahren, gekoppelt wird. Derartige Verfahren sind bekannt, und Vorrichtungen zur Durchführung einer derartigen kontinuierlichen Lichtstreuung unter Verwendung einer Durchflußzelle sind kommerziell erhältlich, beispielsweise unter der Bezeichnung BI-MwA von der Firma Brookhaven Instruments Corporation, Holtsvile USA.

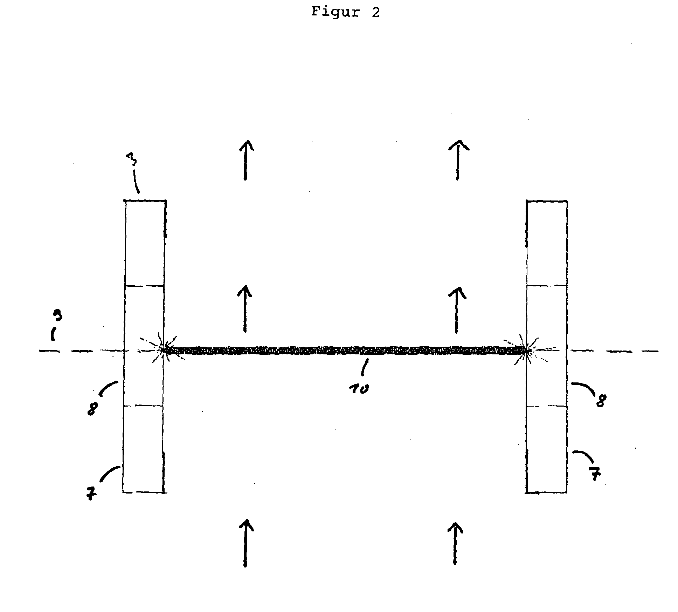

Alle aus dem Stand der Technik bekannten Lichtstreuverfahren bzw. Vorrichtungen zur Durchführung einer Lichtstreuung, unabhängig ob sie batchweise oder kontinuierlich arbeiten, weisen aber den Nachteil auf, daß der durch die Zelle geleitete Lichtstrahl entlang seines ganzen Weges durch die Zelle Streulicht erzeugt. Dies ist in Figur 2 schematisch dargestellt. In Figur 2 geben die Pfeile die Strömungsrichtung des flüssigen Mediums mit den zu untersuchenden Teilchen wieder. Die Durchflußzelle 3 wird von der Behälterwand 7 begrenzt, die speziell geschliffene Bereiche 8 aufweist, durch die der Laserstrahl 9 in die Durchflußzelle ein- und austreten kann. Wie aus Figur 2 ersichtlich ist, erzeugt der durch die Zelle geleitete Lichtstrahl entlang seines ganzen Weges 10 durch die Zelle Streulicht.

Wenn auch die gestreute Lichtmenge im Verhältnis zur unverändert durch die meist verdünnte Probe wandernden Lichtmenge gering ist, so stört sie bei der Messung das Verhältnis von gestreutem zu parasitärem Licht, insbesondere unter geringem Winkel, so daß das Ergebnis stark verfälscht werden kann. Zur Messung unter definierten Raumwinkeln wird das Licht von einem sehr kleinen Streuvolumen und meist nur in einer Ebene gemessen, so daß auch bei hohen Primärlichtstärken nur sehr gering gestreute Lichtmengen detektiert werden müssen. Das im gesamten Raum gestreute Licht addiert sich jedoch in der Wegstrecke des Primärlichts auf und führt zu einem parasitären Ausleuchten der Zelle. Das Verhältnis von parasitärem Licht zu unter einem definierten Raumwinkel gestreuten Licht ist entscheidend für die Qualität der Messung, und falls das parasitäre Licht zu stark wird, ist die Messung nicht durchführbar bzw. liefert keine sinnvollen Ergebnisse.

Das Problem könnte im Prinzip dadurch gelöst werden, daß die Durchflußzelle sehr klein gehalten wird. Allerdings tritt an den Oberflächen der Wände der Durchflußzelle eine Streuung auf, wenn der Primärstrahl die Durchflußzelle trifft bzw. die Durchflußzelle verläßt. Auch durch Behandlung der entsprechenden Stellen der Durchflußzellen, um die Reflexion zu verringern, kann die nicht ganz vermieden werden, so daß die Wegstrecke des Laserlichts in der Durchflußzelle nicht so stark verringert werden kann, wie dies eigentlich erforderlich wäre. Die Streuung aufgrund der Brechungsindexunterschiede zwischen Ein- bzw. Austrittsfenster und Lösungsmittel ist größer als die von der verdünnten Probe in der Zelle verursachte Streulichtzunahme gegenüber dem Streulicht des reinen Lösungsmittels.

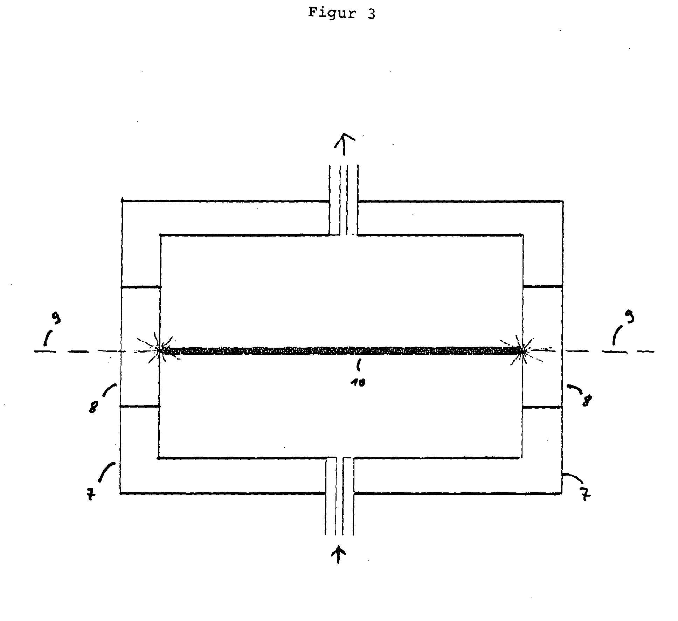

Auch eine Ausgestaltung einer Durchflußzelle wie sie in Figur 3 gezeigt ist, löst das Problem nicht zufriedenstellend. In Figur 3 geben wiederum die Pfeile die Flußrichtung des flüssigen Mediums wieder, das die zu untersuchenden Teilchen enthält, die Bezugszeichen 7 die Wand der Durchflußzelle, die Bezugszeichen 8 gegebenenfalls speziell ausgestaltete Eintritts- und Austrittsbereiche für den Primärstrahl und das Bezugszeichen 9 den Lichtstrahl (Primärstrahl). Hier tritt nur eine geringe Menge an flüssigem Medium mit den zu untersuchenden Teilchen an einer definierten Stelle in die Durchflußzelle ein, allerdings führt die Diffusion der Teilchen in der Durchflußzelle dazu, daß auch bei dieser Ausgestaltung letztlich der Lichtstrahl entlang seines gesamten Weges 10 durch die Zelle Streulicht erzeugt.

Im Stand der Technik gibt es eine Reihe von Vorschlägen wie Durchflußzellen von Lichtstreuapparaturen verbessert werden können.

Beispielsweise schlägt die US-A 4,616,927 vor, eine Meßzelle zu verwenden, bei der suspendierte Teilchen im wesentlichen parallel zu dem Lichtstrahl in einer Meßzelle geführt werden und der Lichtstrahl über spezielle Fenster in die Meßzelle ein- und austritt, ohne daß er die Wände der Meßzelle trifft. Ein elegantes aber aufwendiges Verfahren wird in der US-A 6,052,184 beschrieben, bei der die Meßzelle im wesentlichen lichtundurchlässig ist und Lichtleiter durch die im wesentlichen lichtundurchlässige Zelle direkt in das Probenvolumen geführt werden und das Streulicht aufnehmen. Die US-A 5,305,073 schlägt eine Meßzelle vor, bei der unter Verwendung eines Systems von Linsen und Irisen sichergestellt werden soll, daß nur Licht aus dem zentralen Bereich der Meßzelle die Detektoren erreicht.

Keines dieser Verfahren des Standes der Technik kann jedoch die Probleme des parasitären Streulichts bei der Lichtstreuung in ausreichendem Maße lösen, obwohl in allen Lichtstreuvorrichtungen aus dem Stand der Technik ein enormer Aufwand betrieben wird bezüglich der Präzision der Lichtquelle und der optischen Führung zu den Lichtdetektoren sowie bezüglich des Indexmatchings (Vermeidung von Brechungsindexunterschieden zwischen der Wand der Meßzelle und dem flüssigen Medium, das die zu untersuchenden Teilchen enthält bzw. der Umgebung der Meßzelle).

Insbesondere auf dem Gebiet der Biotechnologie aber auch in der Umwelttechnologie sind Durchflußcytometer bekannt, die unter Verwendung eines sogenannten Mantelstroms ("sheath flow") arbeiten. Hierbei wird die zu untersuchende Probe durch die laminare Strömung eines Mantelstroms orientiert und anschließend detektiert. Z.B. beschreiben die EP-A 288 029 und die US-A 3,893,766 die Verwendung eines derartigen Durchflußcytometers mit Mantelstrom in einem Photometer und die WO 01/42763 beschreibt die Verwendung eines Durchflußcytometers zur Bestimmung von Verunreinigungen in Flüssigkeiten durch Messung von Fluoreszenzlicht.

Derartige Verfahren des Standes der Technik haben mit dem erfindungsgemäßen Lichtstreuverfahren, bei dem physikalische Parameter von Teilchen durch die winkelabhängige Bestimmung des Streulichts ermittelt werden, nichts zu tun. Die Verfahren des Standes der Technik, die einen Mantelstrom verwenden, basieren auf anderen Meßvorrichtungen, wie z.B. einem Photometer und/oder Fluoreszenzdetektoren. Beide Meßmethoden basieren gerade nicht auf Streulichtmessungen. Photometer messen die Abnahme des Primärstrahls durch Absorption des Lichts durch chromophore Gruppen im Molekül. Fluoreszenzdetektoren messen das von chromophoren Gruppen unter einer anderen Wellenlänge ausgesendete Licht. Primär- und Streulicht werden hier durch Filter vom Messensor ferngehalten. Falls bei diesen Verfahren Streulicht bestimmt wird, erfolgt die Bestimmung in der Regel in einem 90° Winkel zum Primärstrahl, da hier die störenden Einflüsse durch den Primärstrahl am geringsten sind und eine derartige Messung zur Bestimmung der Anwesenheit oder Abwesenheit von Teilchen bei "Teilchenzählverfahren" ausreichend ist. Die vorstehend diskutierten Probleme von Lichtstreuverfahren wie SLS, TDSLS oder TILS, z.B. daß bei kleinen Winkeln von unter 90° (also nahe am Primärstrahl) gemessen werden muß, treten bei diesen photometrischen Verfahren bzw. "Teilchenzählverfahren" nicht auf.

Aufgabe der Erfindung ist es, ein verbessertes Verfahren zur Lichtstreuung zur Verfügung zu stellen, das die Nachteile des Standes der Technik nicht aufweist und mit dem insbesondere das Auftreten von parasitärem Licht weitgehend verhindert werden kann. Aufgabe der Erfindung ist es ebenfalls, eine Vorrichtung zur Durchführung dieses Verfahrens zur Verfügung zu stellen. Die Vorrichtung sollte derart sein, daß bestehende Vorrichtungen zur Durchführung einer Durchflußlichtstreuung, insbesondere auch kommerzielle Vorrichtungen, leicht angepaßt werden können, so daß auch mit derartigen Vorrichtungen nach einer entsprechenden Anpassung das erfindungsgemäße Verfahren durchgeführt werden kann. Schließlich besteht eine Aufgabe der Erfindung darin, eine vorteilhafte Durchflußzelle zur Verwendung in einer Vorrichtung zur Durchflußlichtstreuung zur Verfügung zu stellen.

Die Aufgabe wird durch den Gegenstand der Patentansprüche gelöst.

Die Erfindung betrifft damit ein Verfahren zur Durchführung einer Durchflußlichtstreuung zur Bestimmung von Parametern von Teilchen in einem flüssigen Medium, bei dem Teilchen, die sich in einem flüssigen Medium in einer Durchflußzelle befinden, mit Licht bestrahlt werden und das von den Teilchen gestreute Licht gemessen und ausgewertet wird, dadurch gekennzeichnet, daß in der Durchflußzelle eine laminare Strömung eines flüssigen Mediums erzeugt wird, das die zu untersuchenden Teilchen nicht enthält, und die zu untersuchenden Teilchen an einer oder mehreren Stellen so in die laminare Strömung eingebracht werden, daß sie im wesentlichen laminar durch die Durchflußzelle geführt werden.

Die Erfindung betrifft ebenfalls eine Vorrichtung zur Durchführung dieses Verfahrens, umfassend eine Lichtquelle 1, eine Durchflußzelle 3, in der zu untersuchende Teilchen in einem flüssigen Medium mit Licht 9 aus der Lichtquelle 1 bestrahlt werden und das Licht streuen und Mittel 4 zur Bestimmung und Auswertung des von den Teilchen 15 in der Durchflußzelle gestreuten Lichts, dadurch gekennzeichnet, daß sie Mittel 11, 12, 13 umfaßt, die in der Durchflußzelle eine laminare Strömung eines flüssigen Mediums erzeugen können, das die zu untersuchenden Teilchen 15 nicht aufweist und Mittel 14 umfaßt, mit denen die zu untersuchenden Teilchen 15 in die laminare Strömung eingebracht werden können.

Schließlich betrifft die Erfindung eine Durchflußzelle zur Verwendung in einem erfindungsgemäßen Verfahren, die Mittel 11, 12, 13 umfaßt, die in der Durchflußzelle eine laminare Strömung eines flüssigen Mediums erzeugen können, das die zu untersuchenden Teilchen 15 nicht enthält.

Das erfindungsgemäße Verfahren weist gegenüber den bekannten Verfahren des Standes der Technik den entscheidenden Vorteil auf, daß nicht die gesamte Durchflußzelle von zu messenden Teilchen durchsetzt ist, sondern sich die zu messenden Teilchen ausschließlich innerhalb eines sehr engen Bereichs an einer definierten Stelle der Durchflußzelle durch die Durchflußzelle hindurch bewegen. Innerhalb der Durchflußzelle wird mittels eines Hilfsflusses aus einem flüssigen Medium, das die zu untersuchenden Teilchen nicht enthält, eine laminare Strömung erzeugt, und in diese laminare Strömung werden die zu untersuchenden Teilchen dergestalt eingeleitet, daß die laminare Strömung erhalten bleibt und die Teilchen laminar so durch die Zelle geleitet werden, daß sich der Teilchenstrom (bzw. die Teilchenströme) und der Lichtstrahl (bzw. die Lichtstrahlen) kreuzen. Dadurch daß die Teilchen laminar transportiert werden, kann keine Diffusion in den übrigen Probenraum erfolgen. Damit erzeugt der Lichtstrahl (Primärstrahl) nicht im gesamten Probenraum Streulicht sondern ausschließlich an einer definierten Stelle des Probenraums, in dem sich die zu untersuchenden Teilchen befinden. In einer besonderen Ausführungsform können die zu untersuchenden Teilchen an mehreren Stellen der Durchflußzelle gleichzeitig in die Durchflußzelle eingeführt und durch diese hindurchtransportiert werden, so daß eine integrale Messung an mehreren definierten Stellen der Durchflußzelle ermöglicht wird. Hierdurch erreicht man präzisere und rauschärmere Signale als mit herkömmlichen Verfahren. In dieser Anordnung wird jeder einzelne Streulichtpunkt mit einer eigenen Lichtdetektionsoptik vermessen. Ein eventueller Streulichtanteil von Staubpartikeln kann durch moderne Elektronik auf an sich bekannte Art und Weise abgetrennt werden.

Es ist mit dem erfindungsgemäßen Verfahren ebenfalls möglich, mehrere Primärstrahlen, die in der Regel parallel verlaufen werden und die den Teilchenstrom an mehreren definierten Stellen in der Durchflußzelle treffen, für die Lichtstreuung zu verwenden, ohne daß die Zelle zu stark ausgeleuchtet wird. Auch bei dieser Ausführungsform wird jeder einzelne Streulichtpunkt mit einer eigenen Lichtdetektionsoptik vermessen, und die Ergebnisse können aufintegriert werden. Hierdurch ist eine noch weitere Verbesserung des Signal-Rauschverhältnisses möglich.

Das Problem, daß der Primärstrahl auf seiner gesamten Wegstrecke durch die Durchflußzelle auf zu untersuchende Teilchen trifft, die Streulicht erzeugen, das die Messung der Lichtintensität unter einem definierten Winkel erschwert, wird erfindungsgemäß vermieden. Der Primärstrahl trifft nur an definierten Stellen innerhalb der Durchflußzelle auf zu untersuchende Teilchen. Das Auftreten von parasitärem Streulicht wird erheblich reduziert, insbesondere wenn der Teilchenstrom ähnlich klein gehalten wird, wie der fokussierte Laserstrahl.

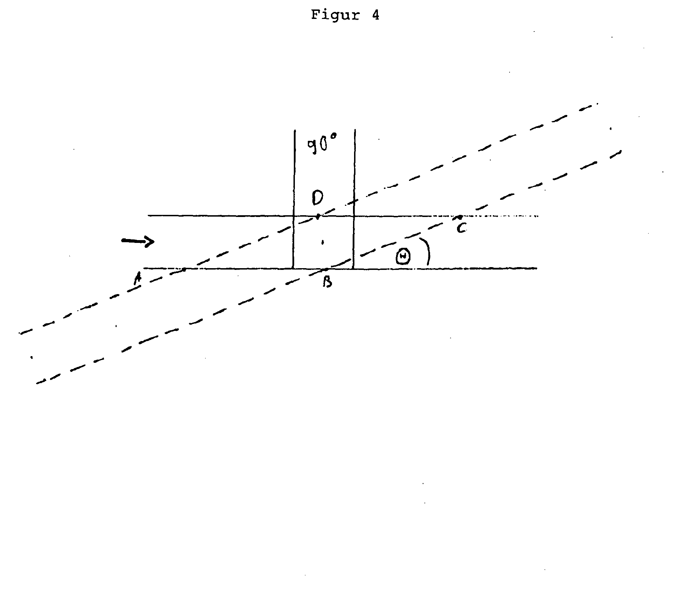

Ein weiterer Vorteil des erfindungsgemäßen Verfahrens wird unter Bezugnahme auf Figur 4 erläutert, in der die Richtung des Laserstrahls durch einen Pfeil dargestellt ist. Figur 4 zeigt eine Durchflußzelle in Aufsicht, das heißt die Probe wird senkrecht zu dem Betrachter hin geführt. Das unter einem Winkel ⊖ detektierte Licht stammt bei einer herkömmlichen Messung aus der mit A, B, C und D bezeichneten Raute. Aufgrund apparativ unterschiedlich großer Streuvolumen muß das Streulichtsignal in Abhängigkeit von dem Winkel ⊖ korrigiert werden, gemäß I_{K} = I x sin⊖, wobei I die gemessene Intensität des Streulichts unter dem Winkel ⊖ darstellt und I_{K} die korrigierte Intensität. Bei dem erfindungsgemäßen Verfahren, bei dem nur an einem Punkt des Streulichtvolumens gestreut wird, ist eine derartige Korrektur nicht erforderlich.

Bei dem erfindungsgemäßen Verfahren ist es auch möglich, verhältnismäßig große Durchflußzellen einzusetzen, so daß der Streuort räumlich weit von der Eintritts- und Austrittsstelle des Primärstrahls in die Durchflußzelle getrennt ist. Das Probenvolumen wird hierdurch nicht vergrößert, da die zu untersuchenden Teilchen nur an einer einzigen Stelle in die Durchflußzelle eingeführt werden und durch die laminare Strömung räumlich begrenzt durch die Durchflußzelle durchgeführt werden. Dadurch können auch Probleme reduziert werden, die durch Streulicht entstehen, das der Primärstrahl beim Eintritt in die Durchflußzelle und beim Austritt aus der Durchflußzelle erzeugt.

Schließlich ist es ein Vorteil des erfindungsgemäßen Verfahrens, daß die zu untersuchenden Teilchen nicht mit den Wänden der Durchflußzelle in Kontakt kommen und sich daher nicht an den Wänden, insbesondere nicht an den Stellen, an denen der Primärstrahl in die Durchflußzelle eintritt bzw. diese verläßt, ablagern können. Derartige Ablagerungen stellen bei Lichtstreuvorrichtungen des Standes der Technik ein häufig auftretendes Problem dar.

Die vorliegende Erfindung betrifft ein Verfahren zur Durchflußlichtstreuung, das heißt eine Lichtstreuung, bei der eine Durchflußzelle kontinuierlich von zu untersuchenden Teilchen durchströmt wird. Bevorzugt betrifft die vorliegende Erfindung ein Verfahren und eine Vorrichtung zur statischen Lichtstreuung und zur zeitabhängigen statischen Lichtstreuung. Der Begriff "Lichtstreuung" wie er hier verwendet wird, umfaßt aber in seiner breitesten Ausgestaltung auch andere Arten der Streuung von Licht an Teilchen in Flüssigkeiten, wie insbesondere die dynamische Lichtstreuung.

Das erfindungsgemäße Verfahren kann auf vorteilhafte Weise mit Verfahren zur Auftrennung von Teilchen, insbesondere mit chromatographischen Verfahren, gekoppelt werden, wobei das erfindungsgemäße Verfahren die aufgetrennten Teilchen kontinuierlich ("online") analysiert. Als geeignetes Verfahren kann beispielsweise die HPLC genannt werden. Besonders vorteilhaft ist ein Einsatz des erfindungsgemäßen Verfahrens bei der GPC (Gelpermeationschromatographie). Mit der GPC werden insbesondere Polymere nach ihrem Molekulargewicht aufgetrennt, das nach der Auftrennung unmittelbar mit dem erfindungsgemäßen Verfahren (bzw. der erfindungsgemäßen Vorrichtung) bestimmt werden kann. Auch eine Kopplung des erfindungsgemäßen Verfahrens (bzw. der erfindungsgemäßen Vorrichtung) mit anderen modernen Auftrennvorrichtungen, wie insbesondere der Feldflußfraktionierung, ist vorteilhaft.

Der Begriff "Teilchen" wie er im Rahmen dieser Anmeldung verwendet wird, ist nicht besonders eingeschränkt. Besonders bevorzugt handelt es sich bei den Teilchen, die mit dem erfindungsgemäßen Verfahren untersucht werden, um Moleküle oder Molekülverbindungen mit einem Molekulargewicht von 200 Da oder mehr, insbesondere von 500 Da oder mehr und besonders bevorzugt von 1000 Da oder mehr. Das erfindungsgemäße Verfahren ist besonders vorteilhaft für Moleküle oder Molekülverbindungen mit einem Molekulargewicht von 10⁹ Da oder darunter, bevorzugt von 10⁸ Da oder darunter, insbesondere von 10⁷ Da oder darunter, es kann aber prinzipiell auch bei Teilchen mit einem größeren Molekulargewicht verwendet werden. Zur Definition von Molekülverbindungen wird auf Römpp, Lexikon Chemie, 10te Auflage, verwiesen.

Auch die Teilchengröße der mit dem erfindungsgemäßen Verfahren untersuchbaren Teilchen ist nicht besonders eingeschränkt. Das Verfahren kann noch bei Teilchen mit einem Durchmesser bis beispielsweise 100 µm angewendet werden, in der Regel wird es aber bei Teilchen mit einem Durchmesser von 10 µm oder darunter angewendet. Besonders vorteilhaft ist das Verfahren bei Teilchen mit einem Durchmesser von 2 µm oder darunter, bevorzugt 1 µm oder darunter, und insbesondere bei Teilchen mit einem Durchmesser von 0,5 µm oder darunter. Mit dem Verfahren können beispielsweise Teilchen mit einer Größe von 0,2 nm oder darüber, insbesondere von 1 nm oder darüber, besonders bevorzugt von 2 nm oder darüber, insbesondere von 5 nm oder darüber, bestimmt werden.

Mit dem erfindungsgemäßen Lichtstreuverfahren können alle Parameter der zu untersuchenden Teilchen bestimmt werden, die allgemein über Lichtstreuung zugänglich sind, und hier kann wieder auf Standardlehrbücher wie Pacel Kratochvil "Classical Light scattering from Polymer Solutions", Elsevier 1987 oder entsprechende Werke verwiesen werden. Als Beispiele von Molekülparametern, die mit der erfindungsgemäß bevorzugten statischen Lichtstreuung bestimmt werden können, können durchschnittliche Teilchenmassen, statistische Verteilungen der Teilchenmassen, beispielsweise bei Polymeren, Gyrationsradien von Molekülen, etc. genannt werden.

Erfindungsgemäß ist wesentlich, daß mit einem flüssigen Medium in der Durchflußzelle eine laminare Strömung erzeugt wird. Das flüssige Medium, mit dem in der Durchflußzelle eine laminare Strömung erzeugt wird, ist erfindungsgemäß nicht besonders eingeschränkt. Es können übliche Lösemittel verwendet werden, die in der Lichtstreuung oder der Chromatographie üblich sind, wie Wasser mit und ohne Detergentien, Salzen, Säuren und Laugen, Aceton, Ether, DMF, THF, Methanol, DMSO, Ethanol, Dichlormethan oder andere organische Lösemittel. Auch Lösemittelgemische sind verwendbar. Bevorzugt weisen das flüssige Medium, das die laminare Strömung in der Durchflußzelle erzeugt und das flüssige Medium, in dem die zu untersuchenden Teilchen vorliegen und in die laminare Strömung eingebracht werden im wesentlichen den gleichen Brechungsindex auf, bevorzugt ist der Brechungsindexunterschied zwischen beiden Medien nicht größer als 10%. In einer besonderen Ausführungsform handelt es sich im wesentlichen um das gleiche flüssige Medium, und Unterschiede, falls vorhanden, gehen auf gelöste Zusatzstoffe wie Detergentien, Salze, Säuren oder Laugen zurück. Es versteht sich von selbst, daß das flüssige Medium so ausgewählt sein muß, daß das verwendete Licht des Primärstrahls an dem flüssigen Medium nicht oder praktisch nicht gestreut wird und das flüssige Medium keine Teilchen enthält, die das Licht des Primärstrahls streuen, da andernfalls wieder unerwünschtes Streulicht auftreten würde, wie bei den Verfahren des Standes der Technik, das die Messung stört.

Die Durchflußzelle wird von dem flüssigen Medium, das die zu untersuchenden Teilchen nicht enthält, durchströmt, so daß eine laminare Strömung erzeugt wird. Unter einer laminaren Strömung wird erfindungsgemäß auch eine Strömung verstanden, die geringfügige Turbulenzen aufweist, sofern hierdurch das erfindungsgemäße Verfahren nicht gestört wird. Wesentlich für das erfindungsgemäße Verfahren ist es, daß die zu untersuchenden Teilchen, nachdem sie an einem Punkt in die laminare Strömung eingebracht wurden, mit der laminaren Strömung und von der laminaren Strömung eingeschlossen durch die Durchflußzelle hindurch transportiert werden, ohne daß sie in benachbarte Bereiche der Zelle diffundieren können und die Durchflußzelle anschließend verlassen. Sofern trotz geringfügiger Turbulenzen der Strömung immer noch gewährleistet ist, daß die zu untersuchenden Teilchen in einem definierten engen Bereich durch die Durchflußzelle hindurchgeführt werden, ohne in der Zelle senkrecht zur Strömungsrichtung zu diffundieren oder durch die turbulente Strömung außerhalb des gewünschten Meßbereichs transportiert werden, ist auch eine solche Strömung eine laminare Strömung im Sinne der Erfindung. Sofern die Teilchen wie vorstehend beschrieben durch die Durchflußzelle (Meßzelle) hindurchgeführt werden, werden sie erfindungsgemäß laminar durch die Durchflußzelle hindurchgeführt.

Während es durchaus möglich ist, daß allein der Transport des flüssigen Mediums, das die zu untersuchenden Teilchen nicht enthält, durch die Durchflußzelle eine ausreichende laminare Strömung erzeugt, wird es erfindungsgemäß bevorzugt, daß Hilfsmittel in der Durchflußzelle vorhanden sind, die das Auftreten einer laminaren Strömung begünstigen. Derartige Hilfsmittel sind in der Regel so aufgebaut, daß in einem für das flüssige Medium, das die zu untersuchenden Teilchen nicht enthält, unlöslichen und undurchlässigen Träger Poren oder Löcher vorgesehen sind, durch die das flüssige Medium, das die zu untersuchenden Teilchen nicht enthält, hindurchtreten kann. Geeignete Hilfsmittel zur Erzeugung der laminaren Strömung sind daher z.B. Fritten (z.B. eine Edelstahlfritte, wie sie unter der Bezeichnung S5 von der Firma GKN Sinter Metals Filters GmbH erhältlich ist) aber auch Siebe, Wabenkörper, wie sie beispielsweise von der Firma Saint-Gobain Advanced Ceramics angeboten werden, oder mikroporöse Folien aus Metall, Polymer, Keramik oder Glas oder Lochplatten aus einem dieser Materialien. Die Porengröße ist im Bereich von 1 mm bis 100 nm, bevorzugt von 100 µm bis 1 µm, z.B. von 5 µm.

Bevorzugt befindet sich ein Hilfsmittel zur Erzeugung der laminaren Strömung in Strömungsrichtung (d.h. in der Regel senkrecht zur Richtung des Primärstrahls) an einer Stelle, die vor der Stelle liegt, an der der Primärstrahl die Durchflußzelle durchquert. Besonders bevorzugt befindet sich ein Hilfsmittel zur Erzeugung der laminaren Strömung in Strömungsrichtung zusätzlich an einer Stelle, die hinter der Stelle liegt, an der der Primärstrahl die Durchflußzelle durchquert. Diese beiden Hilfsmittel können unterschiedlich sein. Die Hilfsmittel, die das Auftreten der laminaren Strömung unterstützen, können die Durchflußzelle beispielsweise in Strömungsrichtung an einem Ende abschließen, bevorzugt schließen sie die Durchflußzelle aber an beiden Enden ab. Es ist möglich, daß die Durchflußzelle an einem Ende von einem anderen Hilfsmittel abgeschlossen wird als an dem anderen Ende, also beispielsweise an einem Ende von einer Fritte abgeschlossen wird und an dem anderen Ende von einem Wabenkörper.

Der Durchmesser der Hilfsmittel (falls sie vorhanden sind), die die Erzeugung der laminaren Strömung unterstützen oder ermöglichen, hängt von der Grundfläche der Durchflußzelle ab. Falls die Hilfsmittel die Durchflußzelle in Strömungsrichtung des flüssigen Mediums abschließen, wie es erfindungsgemäß bevorzugt ist, sind sie in ihrer Ausdehnung an die Grundfläche der Durchflußzelle angepaßt. Die Höhe (oder Dicke) der Hilfsmittel ist nicht besonders eingeschränkt und kann von wenigen µm im Fall einer porösen Folie bis zu einigen Millimetern oder auch Zentimetern im Fall von Fritten oder Wabenkörpern reichen.

In die laminare Strömung des flüssigen Mediums, das die zu untersuchenden Teilchen nicht enthält, werden an geeigneter Stelle die zu untersuchenden Teilchen eingebracht, wobei die zu untersuchenden Teilchen üblicherweise ebenfalls als Lösung oder Dispersion verdünnt in einem geeigneten flüssigen Trägermedium vorliegen. Geeignete flüssige Trägermedien sind übliche, im Bereich der Lichtstreuung oder Chromatographie verwendete, flüssige Trägermedien wie Wasser mit und ohne Detergentien, Salzen, Säuren und Laugen, Aceton, Ether, DMF, THF, Methanol, Ethanol, Dichlormethan, DMSO oder andere organische Lösemittel oder Lösemittelgemische, die dem Fachmann bekannt sind. Das flüssige Trägermedium sollte das Licht des Primärstrahls nicht streuen oder nur so gering streuen, daß die Messung nicht negativ beeinträchtigt wird. Die zu untersuchenden Teilchen werden an einer Stelle in die laminare Strömung in der Durchflußzelle eingebracht, die in Strömungsrichtung vor der Stelle liegt, an der der Primärstrahl die Durchflußzelle durchquert. Die zu untersuchenden Teilchen werden dann laminar durch die Durchflußzelle geführt und treffen den von dem Primärstrahl ausgeleuchteten Bereich. In diesem Bereich streuen sie das Licht des Primärstrahls, und die Intensität des Streulichts wird in Abhängigkeit des Streuwinkels auf übliche Art und Weise durch Lichtdetektoren bestimmt und ausgewertet, wobei allerdings durch die erfindungsgemäße Verfahrensführung parasitäres Streulicht aus anderen Bereichen der Durchflußzelle nicht auftreten kann, da sich in anderen Bereichen der Durchflußzelle zwar flüssiges Medium befindet, dieses aber keine zu untersuchenden Teilchen aufweist. Auch eine Korrektur der Intensität ist u.U. nicht erforderlich, wie vorstehend erwähnt.

Die Mittel, mit denen die zu untersuchenden Teilchen in die laminare Strömung des flüssigen Mediums in der Durchflußzelle eingebracht werden, sind nicht besonders eingeschränkt, und hier kann beispielsweise eine übliche Kanüle aus Glas, Edelstahl oder einem anderen Material verwendet werden. Auch speziell geformte Düsen oder trichterförmige Aufweitungen der Kanülen zur Beeinflussung der Strahlform und Geschwindigkeit können eingesetzt werden. Die Teilchen bewegen sich dann in einem eng begrenzten Volumen durch die Durchflußzelle, wodurch eine hypothetische Durchflußzelle mit sehr kleinem Durchmesser gebildet wird, deren "virtuelle Wände" aus dem flüssigen Medium bestehen, mit dem die laminare Strömung erzeugt wird. Parasitäre Strahlung durch Brechung an diesen "virtuellen Wänden" kann nicht auftreten, wenn der Brechungsindex des Lösungsmittels, mit dem die zu untersuchenden Teilchen gelöst oder suspendiert sind, identisch mit dem Brechungsindex des reinen Lösungsmittels ist, mit dem die laminare Hilfsströmung aufgebaut wird, und der Weg, auf dem der Lichtstrahl Streulicht erzeugt, ist klein und im wesentlichen auf den Durchmesser beispielsweise der Kanüle beschränkt, durch die die zu untersuchenden Teilchen in die laminare Strömung eingebracht werden.

Die erfindungsgemäße Vorrichtung zur Durchführung einer Lichtstreuung ist eine übliche Vorrichtung, wie sie im einleitenden Teil beschrieben wurde und wie sie kommerziell erhältlich ist, mit der Maßgabe, daß erfindungsgemäß die Durchflußzelle so ausgestaltet ist, daß das erfindungsgemäße Verfahren durchgeführt werden kann. Bei der Lichtquelle in der erfindungsgemäßen Vorrichtung handelt es sich in der Regel um einen Laser, der Licht in einer geeigneten Wellenlänge, z.B. im Bereich von 300 nm bis 900 nm, bevorzugt von 350 nm bis 750 nm, stärker bevorzugt von 400 nm bis 700 nm, ausstrahlen kann, beispielsweise um einen Argonionenlaser oder Halbleiterlaser.

Die Durchflußzelle ist bevorzugt aus einem für das Laserlicht durchsichtigen Material, und insbesondere Durchflußzellen aus Glas oder einem durchsichtigen Polymer sind bevorzugt. Die Durchflußzelle kann aber prinzipiell auch so aufgebaut sein, wie es aus der US-A 6,052,184 bekannt ist. Die räumliche Ausgestaltung der Durchflußzelle kann in weiten Bereichen variieren, geeignete räumliche Ausgestaltungen sind Zylinder, Kugel oder Quaderformen. Die Stelle, an denen der Lichtstrahl in die Durchflußzelle trifft bzw. diese verläßt, sollte bevorzugt planar sein und bevorzugt so geschliffen sein, daß der Primärstrahl möglichst wenig gestreut wird, wenn er in die Durchflußzelle eintritt und diese verläßt. Im Prinzip können übliche kommerziell erhältliche Durchflußzellen verwendet werden, die so angepaßt wurden, daß sie von einem flüssigen Medium, das die zu untersuchenden Teilchen nicht enthält, laminar durchströmt werden und die zu untersuchenden Teilchen an einer Stelle in die laminare Strömung eingebracht werden können.

Ein erheblicher Vorteil des erfindungsgemäßen Verfahrens und damit auch der erfindungsgemäßen Vorrichtung zur Durchführung einer Durchflußlichtstreuung liegt darin, daß eine Durchflußzelle verwendet werden kann, die senkrecht zur Strömungsrichtung der zu untersuchenden Teilchen und in Richtung des Primärlichtstrahls einen großen Durchmesser aufweist, ohne daß die Strecke, auf der der Primärlichtstrahl Streulicht erzeugt, vergrößert wird. Bevorzugt weist erfindungsgemäß eine Durchflußzelle in Richtung senkrecht zur Strömungsrichtung der zu untersuchenden Teilchen und parallel zur Richtung des Primärlichtstrahls einen Innendurchmesser von beispielsweise 0,5 bis 100 mm auf, bevorzugt von 2 bis 50 mm, stärker bevorzugt von 3 bis 30 mm. Die Länge der Durchflußzelle in Strömungsrichtung ist nicht besonders eingeschränkt und gerätebedingt. Übliche Durchflußzelle haben in Strömungsrichtung eine Länge im Bereich von 1 mm bis 40 mm. Die Breite der Durchflußzelle senkrecht zur Strömungsrichtung und senkrecht zur Richtung des Primärstrahls ist nicht besonders eingeschränkt. Bei üblichen Durchflußzellen mit einem runden oder quadratischen Querschnitt ist die Breite der Durchflußzelle in Richtung senkrecht zur Strömungsrichtung und senkrecht zur Richtung des Primärstrahls genauso groß wie die Breite der Durchflußzelle parallel zur Richtung des Primärstrahls, aber auch andere geometrische Ausgestaltungen einer Durchflußzelle sind bekannt und können erfindungsgemäß verwendet werden.

Der Innendurchmesser der Kapillare, mit der die zu untersuchenden Teilchen in die laminare Strömung in der Durchflußzelle eingebracht werden, ist nicht besonders eingeschränkt. Damit das Streulicht möglichst reduziert wird, sollte der Innendurchmesser nicht zu groß sein. Der für den jeweiligen Fall am besten geeignete Innendurchmesser der Kapillare hängt von dem verwendeten flüssigen Trägermedium ab, von der gewünschten Durchflußgeschwindigkeit des Trägermediums mit den zu untersuchenden Teilchen, von der Größe der zu untersuchenden Teilchen und von dem Innendurchmesser der Durchflußzelle. Üblicherweise wird die Kapillare einen Innendurchmesser von 0,05 bis 1,0 mm aufweisen, bevorzugt von 0,05 bis 0,5, besonders bevorzugt von 0,1 bis 0,5 mm. Die vorstehenden Ausführungen geltend entsprechend, wenn anstelle einer Kapillare ein anderes Mittel verwendet wird, um die zu untersuchenden Teilchen in die laminare Strömung der Durchflußzelle einzubringen.

Die Strömungsgeschwindigkeit der zu untersuchenden Teilchen bzw. des flüssigen Mediums, das die zu untersuchenden Teilchen enthält, in der Kapillare, wird in der Regel in Abhängigkeit von der Strömungsgeschwindigkeit des flüssigen Mediums gewählt, das die laminare Strömung erzeugt, und hängt von dem Innendurchmesser der Kapillare ab. Ein größerer Innendurchmesser der Kapillare bedeutet eine geringere Fließgeschwindigkeit für die zu untersuchenden Teilchen. Darüber hinaus wird durch die Verwendung eines größeren Innendurchmessers der Kapillare auch wieder mehr parasitäres Streulicht erzeugt. Breite, Form und Geschwindigkeit des Strahls kann am Ende der Kapillaren z.B. durch Düsenformen beeinflußt werden. Insbesondere kann die Eingangsdüse anders geformt sein, als die Ausgangsdüse. Übliche Fließgeschwindigkeiten des flüssigen Mediums, das die zu untersuchenden Teilchen enthält bzw. der zu untersuchenden Teilchen liegen im Bereich von 0,1 mm/s bis 10 m/s, bevorzugt im Bereich von 1 mm/s bis 1 m/s, stärker bevorzugt im Bereich von 10 mm/s bis 500 mm/s, z.B. bei etwa 100 mm/s.

Die Strömung des flüssigen Mediums kann z.B. durch handelsübliche HPLC-Pumpen erzeugt werden. Dort werden in der Regel Doppelkolbenpumpen eingesetzt. Aber auch Spritzenpumpen können verwendet werden.

Die Strömungsgeschwindigkeit des flüssigen Mediums, das die laminare Strömung erzeugt, in der Durchflußzelle hängt von dem speziellen Meßaufbau, dem Volumen der Zelle und dem verwendeten flüssigen Medium ab. Geeignete Durchflußgeschwindigkeiten liegen im Bereich von 0,1 mm/s bis 10 m/s, bevorzugt im Bereich von 1 mm/s bis 1 m/s, stärker bevorzugt im Bereich von 10 mm/s bis 500 mm/s, z.B. bei etwa 100 mm/s.

Besonders bevorzugt ist die Strömungsgeschwindigkeit des flüssigen Mediums, das die zu untersuchenden Teilchen enthält (Trägermedium) höher als die Strömungsgeschwindigkeit des flüssigen Mediums, das die zu untersuchenden Teilchen nicht enthält und das die laminare Strömung in der Durchflußzelle zur Verfügung stellt.

Eine geringe Strömungsgeschwindigkeit der Lösung für den laminaren Fluß senkt den Verbrauch dieser Flüssigkeit. Zum anderen wird durch einen langsamen Fluß die Strömung der Lösungsmittelmoleküle ganz aus dem Zeitfenster der eventuell eingesetzten Korrelatoren für die dynamische Lichtstreuung herausgeschoben. Somit kann diese Art einer möglichen Störung vollständig ausgeschaltet werden.

Der Ort, an dem die zu untersuchenden Teilchen in die laminare Strömung des flüssigen Mediums in der Durchflußzelle eingebracht werden, ist erfindungsgemäß nicht besonders eingeschränkt. Besonders bevorzugt sollte er möglichst weit von dem Eintritts- bzw. Austrittspunkt des Laserstrahls in die bzw. aus der Durchflußzelle entfernt liegen, so daß auch Messungen von kleinen Streuwinkeln möglich sind, die andernfalls durch Reflektion des Primärstrahls an den Wänden der Durchflußzelle erschwert oder unmöglich gemacht werden. Ein geeigneter Ort, um die zu untersuchenden Teilchen in die laminare Strömung des flüssigen Mediums einzubringen, ist also etwa in der Mitte zwischen dem Punkt, in dem der Primärstrahl die Durchflußzelle trifft, und dem Punkt, an dem der Primärstrahl die Durchflußzelle verläßt, in Strömungsrichtung an einer Stelle, die vor der Stelle liegt, an der der Primärstrahl die Durchflußzelle durchquert.

Während in einer Ausführungsform der Erfindung die zu untersuchenden Teilchen an einer einzigen Stelle in die laminare Strömung der Durchflußzelle eingebracht werden, kann es auch vorteilhaft sein, die zu untersuchenden Teilchen an zwei oder mehr Stellen gleichzeitig in die laminare Strömung der Durchflußmeßzelle einzubringen. Für diese besondere Ausführungsform gelten die vorstehenden Ausführungen entsprechend. Dies ermöglicht es, eine integrale Lichtstreumessung vorzunehmen, durch die wesentlich präzisere und rauschärmere Signale als bisher erreicht werden können. Bei einer derartigen Anordnung dient jedes Partikel als einzelner Streulichtpunkt, der mit einer eigenen Lichtdetektionsoptik vermessen werden kann, und die Signalintensität kann aufintegriert werden. Der Streulichtanteil von Staubpartikeln, der unter Umständen stören könnte, kann elektronisch abgetrennt werden.

Das erfindungsgemäße Verfahren und die erfindungsgemäße Vorrichtung werden mit Bezug auf die Figuren beispielhaft näher erläutert.

Figur 1 zeigt schematisiert den allgemeinen Aufbau einer Lichtstreuvorrichtung.

Figur 2 zeigt das Prinzip einer herkömmlichen Durchflußzelle.

Figur 3 zeigt eine nichterfindungsgemäße abgewandelte herkömmliche Durchflußzelle.

Figur 4 dient zur Erläuterung der Winkelkorrektur des Streulichtsignals aufgrund apparativer Unterschiede.

Figur 5a zeigt schematisch eine bevorzugte Ausführungsform einer erfindungsgemäßen Durchflußzelle.

Figur 5b zeigt schematisch eine weitere bevorzugte Ausführungsform einer erfindungsgemäßen Durchflußzelle.

Figur 6a zeigt schematisch eine Lichtstreuung, die sowohl mit einer herkömmlichen als auch mit einer erfindungsgemäßen Durchflußzelle durchgeführt werden kann. In Figur 6b und 6c ist das Streulichtbild entlang der Linie A-A' der Figur 6a dargestellt. Figur 6b zeigt das Streulichtbild bei Durchflußzellen des Standes der Technik, Figur 6c zeigt das Streulichtbild bei Verwendung einer erfindungsgemäßen Durchflußzelle.

Figur 7 zeigt eine besonders bevorzugte erfindungsgemäße Streulichtzelle, bei der an mehr als einer Stelle (z.B. drei Stellen) zu untersuchende Teilchen in einem geeigneten Trägermedium in die laminare Strömung der Durchflußzelle eingebracht werden, wodurch, gegebenenfalls auch durch die Verwendung mehrerer Primärstrahlen, eine integrale Messung ermöglicht wird.

Figur 8 zeigt einen Vergleich einer erfindungsgemäßen Messung mit einer Messung nach dem Stand der Technik bei einem Meßwinkel von 90°.

Figur 9 zeigt einen Vergleich einer erfindungsgemäßen Messung mit einer Messung nach dem Stand der Technik bei einem Meßwinkel von 10°.

Figur 1 zeigt schematisch eine übliche statische Lichtstreuung mit einem Laser 1, z.B. einem Argonionenlaser, einer Sammellinse 2, die das Licht auf die Durchflußmeßzelle 3 bündelt. Die Durchflußmeßzelle 3 ist in zylindrischer Form dargestellt, aber auch andere Formen wie Rechteckformen oder zylindrische Formen mit abgeflachten Kanten, an denen das Laserlicht ein- und austritt, sind üblich. Die Wandung der Durchflußzelle ist in der Regel aus durchsichtigem Material, meistens aus Glas. Ein Strahlstopper 5, der auf übliche Art und Weise ausgestaltet sein kann, beispielsweise wie es in der US-A 5,305,073 beschrieben ist, vernichtet möglichst streulichtfrei den Primärstrahl. Mit Photodetektoren 4 wird bei verschiedenen Streuwinkeln α die Intensität des Streulichts gemessen. Verschiedene geometrische Blenden 6 sorgen dafür, daß ausschließlich in dem bestimmten Winkel α gestreutes Licht an den Photodetektor gelangt. Die zu untersuchende Probe wird senkrecht durch die Blattebene geführt.

Figur 2 zeigt schematisch einen Schnitt durch die Durchflußzelle 3, die für die Darstellung der Figur 2 so gedreht wurde, daß die Flußrichtung des Mediums, das die zu untersuchenden Teilchen enthält, durch die Pfeile dargestellt wird (Drehung um 90°, Schnitt entlang der Linie B-B'). Die Wand 7 der Durchflußzelle weist sowohl bei den Durchflußzellen des Standes der Technik als auch bei den erfindungsgemäßen Durchflußzellen bevorzugt Abschnitte 8 auf, die speziell behandelt wurden, um die Reflektion beim Durchtritt des Primärstrahls 9 zu verringern. Wie in der Figur 2 schematisch dargestellt, kommt es dennoch beim Eintritt des Laserlichts in das flüssige Medium, das die zu untersuchenden Teilchen enthält, und beim Austritt aus diesem Medium zu unerwünschten Streueffekten. Da die gesamte Durchflußzelle Teilchen enthält, die das Licht streuen, entsteht Streulicht 10 entlang des gesamten Weges des Laserstrahls durch die Durchflußzelle.

In Figur 3 ist eine nicht-erfindungsgemäße Abwandlung einer Durchflußzelle es Standes der Technik gezeigt, bei der nur an einer Stelle der Durchflußzelle Probenmaterial eintritt und an einer Stelle der Durchflußzelle Probenmaterial austritt, wie es durch die Pfeile gekennzeichnet ist. Durch Diffusion der Teilchen in dem flüssigen Medium in der Durchflußzelle entsteht allerdings wiederum Streulicht entlang des gesamten Weges 10 des Primärstrahls 9 durch die Durchflußzelle. Eine Verringerung des Durchmessers der Durchflußzelle, also eine Verkürzung der Strecke B-B' in Figur 1, würde dieses Problem zwar lösen, allerdings wären dann die Effekte durch die an dem Eintrittspunkt des Laserlichts in die Durchflußzelle und an dem Austrittspunkt des Laserlichts aus der Durchflußzelle dargestellten unerwünschten parasitären Streuung so groß, daß eine sinnvolle Messung, insbesondere bei kleinen Winkeln, nicht mehr möglich wäre.

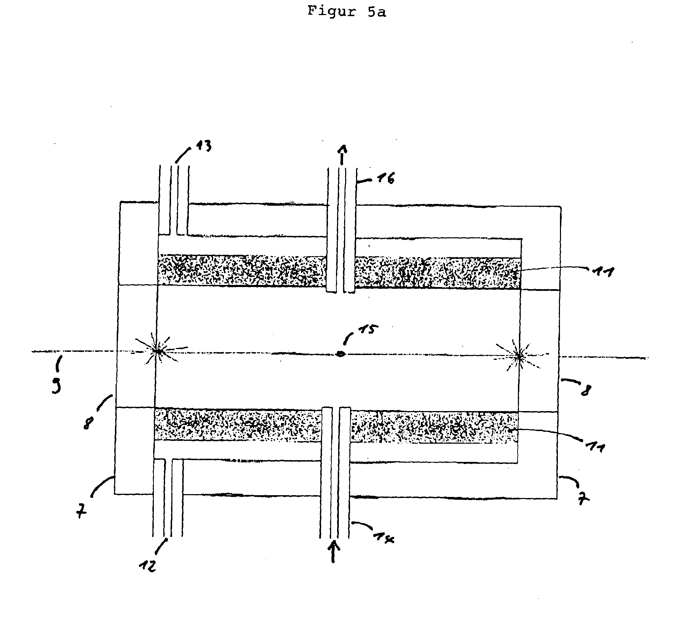

Figur 5a zeigt eine besonders vorteilhafte Ausführungsform einer erfindungsgemäßen Streulichtzelle, die in dem erfindungsgemäßen Verfahren verwendet werden kann. Auch die Abbildung 5a entspricht wieder einem Schnitt entlang der Linie B-B' aus Figur 1 nach Drehung um 90°. Die Streulichtzelle entspricht einer Streulichtzelle, wie sie in Figur 3 gezeigt ist, allerdings wird bei der erfindungsgemäßen Streulichtzelle ein flüssiges Medium, das keine Teilchen enthält, die das Licht streuen, durch eine separate Zufuhr 12 in die Streulichtzelle eingeleitet und über einen separaten Abfluß 13 aus der Streulichtzelle abgeleitet.

Das flüssige Medium, das die zu untersuchenden Teilchen nicht enthält, wird über den Zufluß 12 in die Durchflußzelle eingebracht. Das flüssige Medium trifft hier auf die bevorzugt vorhandenen Hilfsmittel zur Erzeugung einer laminaren Strömung 11, in der in Figur 5a dargestellten Ausführungsform eine Fritte. Das flüssige Medium bewegt sich laminar durch die Durchflußzelle, bis es über die Hilfsmittel 11 (hier wieder eine Fritte) zum Abfluß 13 gelangt, an dem es die Durchflußzelle wieder verläßt. Über den Zufluß 14 werden die zu untersuchenden Teilchen in Pfeilrichtung in die Durchflußzelle eingeführt. Bei dem Zufluß 14 handelt es sich bevorzugt um eine Kanüle, aber auch andere Mittel sind möglich. Die zu untersuchenden Teilchen 15 treffen bevorzugt in der Mitte der Durchflußzelle auf den Primärstrahl 9 und streuen das Licht, das dann auf bekannte Art und Weise über geeignete geometrische Begrenzungen 6 an die Detektoren 4 weitergeleitet wird. Da die zu untersuchenden Teilchen 15 in der laminaren Strömung des über den Zufluß 12 zugeführten flüssigen Mediums praktisch eingeschlossen sind, werden sie über den Abfluß 16 wieder aus der Durchflußzelle entfernt. Der Abfluß 16 kann eine breitere oder trichterförmige bzw. düsenförmige Öffnung aufweisen als der Zufluß 16, um zu gewährleisten, daß sämtliche zu untersuchenden Teilchen 15 über den Abfluß 16 die Durchflußzelle verlassen. In diesem Fall kann das flüssige Medium, das die laminare Strömung in der Durchflußzelle erzeugt, teilweise oder ganz wiederverwendet werden und von der Abflußleitung 13 erneut an die Durchflußleitung 12 gepumpt werden. Die Strömung in dem flüssigen Medium, das über die Zuflußleitung 12 zugeführt und über die Abflußleitung 13 abgeführt wird, kann durch eine übliche Pumpe erzeugt werden.

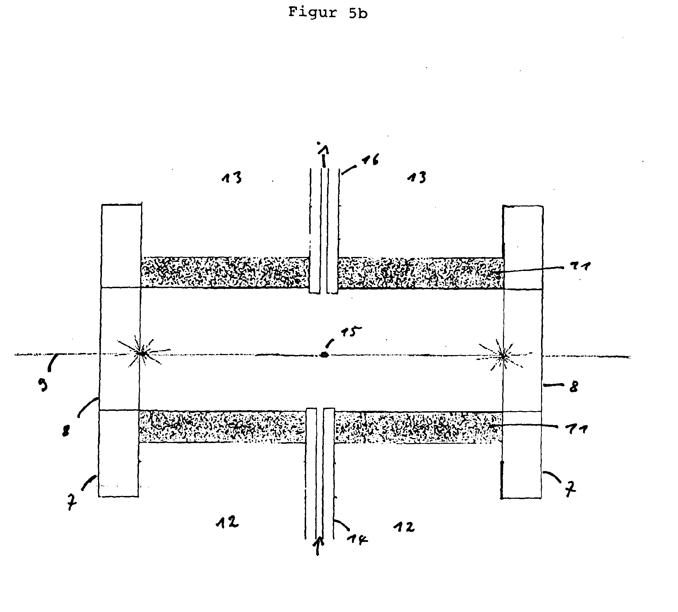

In der Ausführungsform gemäß Figur 5b wird das flüssige Medium, das die zu untersuchenden Teilchen nicht enthält und das die laminare Strömung in der Durchflußzelle erzeugt, über die gesamte Breite der Durchflußzelle auf die gegebenenfalls vorhandenen Hilfsmittel 11, hier eine Fritte, geführt, beispielsweise durch eine übliche Pumpe. Entsprechend erfolgt der Abfluß des flüssigen Mediums, das die zu untersuchenden Teilchen nicht enthält, über die gegebenenfalls vorhandenen Hilfsmittel 11 (hier eine Fritte) über den Abfluß 13, und das flüssige Medium kann gegebenenfalls wieder zu dem Zufluß 12 gepumpt werden. Ansonsten erfolgt der Transport der Teilchen und die Messung wie vorstehend unter Figur 5a beschrieben.

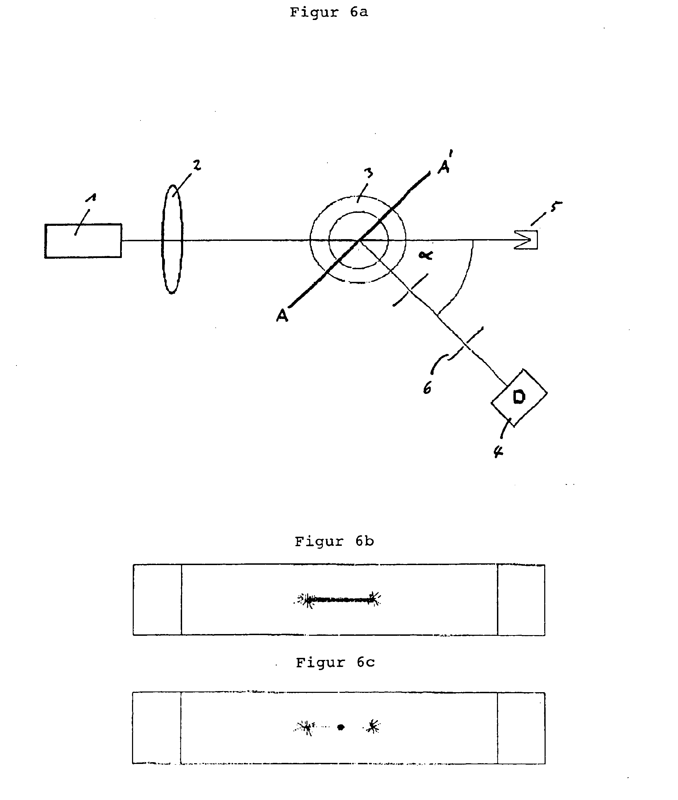

Die Vorteile des erfindungsgemäße Verfahrens gegenüber den Verfahren des Standes der Technik werden in den Figuren 6a bis 6c deutlich. Figur 6a zeigt, wiederum schematisch, eine übliche Lichtstreuvorrichtung wie sie auch in Figur 1 gezeigt ist, die sowohl erfindungsgemäß mit einer besonders ausgestalteten Durchflußzelle als auch mit Durchflußzellen des Standes der Technik betrieben werden kann. Figur 6b zeigt das Streubild entlang des Schnittes A-A' im Meßwinkel α, das ein Detektor 4 bei üblicher Verfahrensführung nach dem Stand der Technik mit konventionellen Lichtstreuvorrichtungen sieht. Da der Primärstrahl entlang seines gesamten Weges auf zu untersuchende Teilchen trifft, ist das Streubild eine gerade Linie, deren Enden von den Streupunkten markiert werden, die der Primärstrahl beim Eintritt in die Durchflußzelle bzw. beim Austritt aus der Durchflußzelle erzeugt. Es ist ausgesprochen schwierig und mit einer großen Ungenauigkeit verbunden, die räumlichen Begrenzer 6 so auszurichten, daß ausschließlich das gewünschte Streulicht in den Photodetektor 4 fällt.

Anders die Situation bei einer erfindungsgemäßen Verfahrensführung mit einer erfindungsgemäßen Vorrichtung, bei der das Streubild entlang des Schnittes A-A' in Figur 6c dargestellt ist. Hier treten nur drei wohl definierte Streupunkte auf, die Streupunkte, die beim Eintritt des Primärstrahls in die Durchflußzelle bzw. beim Austritt des Primärstrahls aus der Durchflußzelle entstehen und der Streupunkt, der von der Streuung an den zu untersuchenden Teilchen 15 gebildet wird. Da die zu untersuchenden Teilchen praktisch punktförmig in der Durchflußzelle vorliegen, entsteht keine "Streustrecke" wie bei den Verfahren des Standes der Technik und wie es in Figur 6b gezeigt ist. Es ist erheblich einfacher und mit größerer Genauigkeit möglich, das unter einem bestimmten Winkel α von den zu untersuchenden Teilchen 15 gestreute Licht genau zu bestimmen und unerwünschtes Streulicht zu vermeiden. Darüber hinaus wird die Justierung der Lichtdetektoren und der räumlichen Begrenzer 6 vereinfacht.

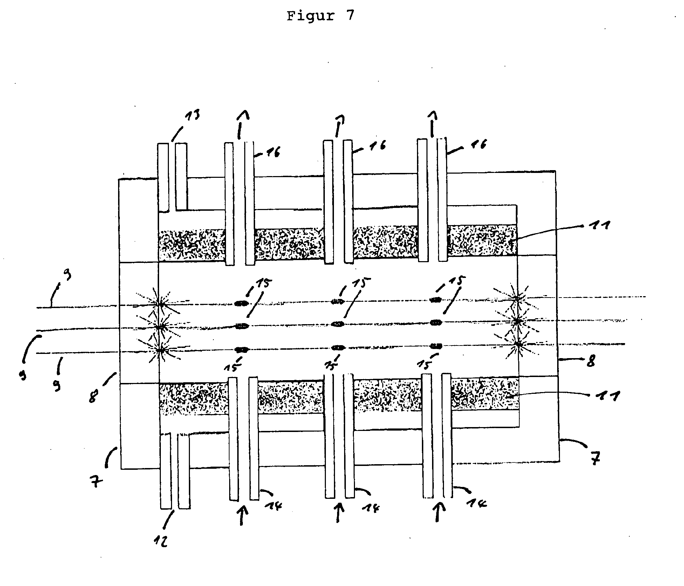

Figur 7 zeigt eine besonders bevorzugte Ausgestaltung des erfindungsgemäßen Verfahrens bzw. der erfindungsgemäßen Vorrichtung. Die in Figur 7 gezeigte Vorrichtung entspricht im wesentlichen der in Figur 5a gezeigten Vorrichtung, allerdings werden hier an mehreren definierten Stellen, in der Figur 7 sind drei Stellen gezeigt, über mehrere unabhängige Zuleitungen 14 zu untersuchende Teilchen 15 in die laminare Strömung des über die Zuleitung 12 eingeführten und über die Ableitung 13 abgeführten flüssigen Mediums eingebracht. Erfindungsgemäß ist es ebenfalls möglich, mehr als einen Primärstrahl zu verwenden, beispielsweise, wie es in Figur 7 gezeigt ist, drei Primärstrahlen. Die Lichtstreuung erfolgt damit nicht mehr nur an einem Punkt in der Mitte der Durchflußzelle sondern an mehreren Punkten, in dem in Figur 7 gezeigten Beispiel an definiert neun Punkten. Das erfindungsgemäße Verfahren ermöglicht es, die Streupunkte so weit zu separieren, daß das von ihnen erzeugte Streulicht jeweils separat ausgewertet werden kann, ohne daß das Licht der anderen Streupunkte stört. Durch geeignete Detektoren kann das von jedem Streupunkt ausgesandte Licht aufgenommen und durch eine geeignete elektronische Schaltung aufintegriert werden. Hierdurch wird das Signalrauschverhältnis gegenüber den Messungen an einem Punkt nochmals erheblich verbessert.

Anstelle der in den Figuren gezeigten speziellen Ausführungsformen sind selbstverständlich Abwandlungen des erfindungsgemäßen Verfahrens möglich. Beispielsweise kann die Ableitung bzw. die Ableitungen 16 fehlen und die zu untersuchenden Teilchen werden mit dem Abfluß 13 aus der Durchflußzelle entfernt, wobei dann allerdings eine Wiederverwendung des flüssigen Mediums, das die laminare Strömung erzeugt, nicht möglich ist. Anstelle einer einzigen Zuleitung 12 in Figur 5a oder einer einzigen Ableitung 13 in Figur 5a können auch mehrere Zuleitungen 12 und/oder mehrere Ableitungen 13 vorhanden sein, um das flüssige Medium, das die laminare Strömung erzeugt, in die Durchflußzelle einzubringen und die laminare Strömung zu erzeugen.

Das folgende Beispiel zeigt die erhebliche Überlegenheit des erfindungsgemäßen Verfahrens gegenüber Verfahren des Standes der Technik.

### Beispiel

In einer handelsüblichen Lichtstreuvorrichtung der Firma Consenxus wurde unter Verwendung eines Halbleiterlasers bei einer Wellenlänge von 532 nm eine Lichtstreuung durchgeführt. Mit der Lichtstreuung wurde die Verbindung Pullulan (ein als Standard bekanntes Polysaccharid mit 212 kDa) untersucht. Das Streulicht wurde einmal unter einem Winkel von 90° aufgenommen und einmal unter einem Winkel von 10°. Der Versuch wurde einmal mit der Lichtstreuvorrichtung unter Verwendung der mitgelieferten Durchflußzelle durchgeführt, bei der es sich um eine zylinderförmige Glaszelle mit einem inneren Durchmesser von 8 mm und einer Länge von 3 mm handelt. Anschließend wurde die Lichtstreuvorrichtung zur Durchführung des erfindungsgemäßen Verfahrens angepaßt, in dem die Durchflußzelle an beiden Enden mit einer Edelstahlfritte S5 der Firma GKN Sinter Metals Filter GmbH mit einer Porengröße von 5 µm verschlossen wurde. Mittels einer üblichen HPLC-Pumpe der Bezeichnung Flom P301 von der Firma Gastorr wurde das Lösemittel Wasser mit einer Geschwindigkeit von 0,2 ml/min über die Fritte durch die Durchflußzelle gepumpt. In den Fritten war vorher jeweils eine Öffnung vorgesehen worden, durch die eine Edelstahlkanüle für die Zufuhr der zu untersuchenden Teilchen bzw. für die Abfuhr der zu untersuchenden Teilchen eingebracht wurde. Die zu untersuchenden Teilchen lagen in einer Konzentration von 0,1 g/l in Wasser mit 20 mmol KNO₃. Die zu untersuchenden Teilchen wurden mit einer Durchflußgeschwindigkeit von 0,5 ml/min in die laminare Strömung der Durchflußzelle eingebracht.

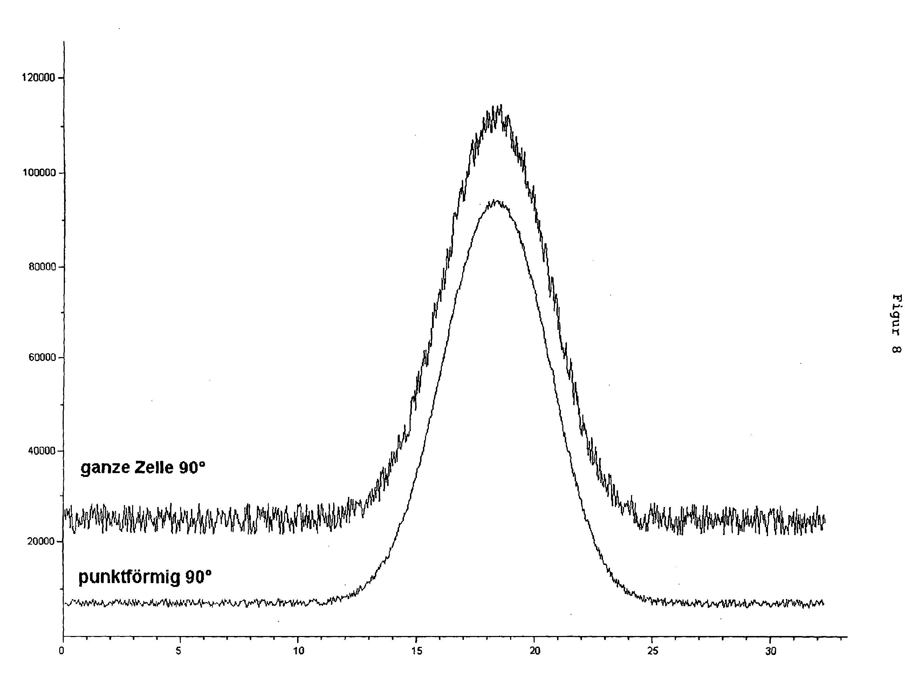

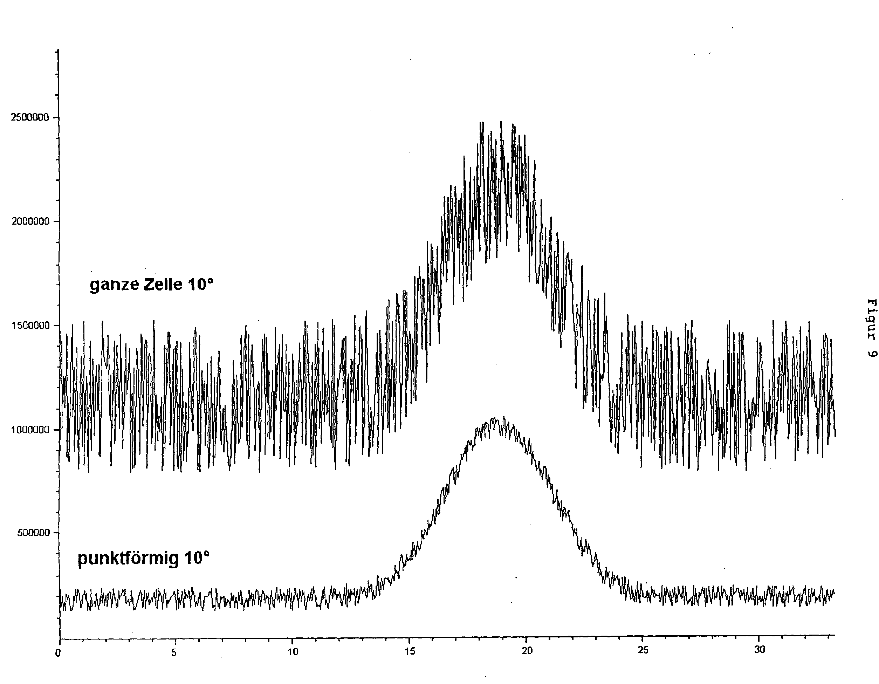

Die Ergebnisse der Messungen sind in den Figuren 8 und 9 gezeigt. Die Meßkurven nach dem Stand der Technik sind durch die Angabe "ganze Zelle" und die Winkelangabe gekennzeichnet, die Meßkurven nach dem erfindungsgemäßen Verfahren durch die Angabe "punktförmig" und die Winkelangabe. Man erkennt, daß durch das erfindungsgemäße Verfahren das Signal-Rauschverhältnis und damit die Empfindlichkeit der Messung erheblich verbessert werden kann. Der Effekt ist besonders gravierend bei Messungen unter kleinen Winkeln.

## Patentansprüche

1. Verfahren zur Durchführung einer Durchflußlichtstreuung zur Bestimmung von Parametern von Teilchen in einem flüssigen Medium, bei dem Teilchen, die sich in einem flüssigen Medium in einer Durchflußzelle befinden, mit Licht bestrahlt werden und das von den Teilchen gestreute Licht gemessen und ausgewertet wird, **dadurch gekennzeichnet, daß** in der Durchflußzelle eine laminare Strömung eines flüssigen Mediums erzeugt wird, das die zu untersuchenden Teilchen nicht enthält, und die zu untersuchenden Teilchen an einer oder mehreren Stellen so in die laminare Strömung eingebracht werden, daß sie laminar durch die Durchflußzelle geführt werden.

2. Verfahren nach Anspruch 1, **dadurch gekennzeichnet, daß** es sich bei den Teilchen um Moleküle oder Molekülverbindungen mit einem Molekulargewicht von 200 Da oder mehr handelt.

3. Verfahren nach Anspruch 1 oder 2, **dadurch gekennzeichnet, daß** die Teilchen einen Durchmesser von 10 µm oder weniger aufweisen.

4. Verfahren nach einem der Ansprüche 1 bis 3, **dadurch gekennzeichnet, daß** die Strömungsgeschwindigkeit des flüssigen Mediums in der Durchflußzelle im Bereich von 10 mm/s bis 500 mm/s liegt, bevorzugt bei etwa 100 mm/s.

5. Verfahren nach einem der Ansprüche 1 bis 4, **dadurch gekennzeichnet, daß** die zu untersuchenden Teilchen in einem flüssigen Trägermedium in die Durchflußzelle eingebracht werden, bei dem es sich um ein flüssiges Medium handelt, das einen Brechungsindex aufweist, der im wesentlichen dem des flüssigen Mediums entspricht, das die laminare Strömung in der Durchflußzelle erzeugt.

6. Verfahren nach einem der Ansprüche 1 bis 5, **dadurch gekennzeichnet, daß** die zu untersuchenden Teilchen an einer einzigen Stelle der Durchflußzelle in die laminare Strömung eingebracht werden.

7. Verfahren nach einem der Ansprüche 1 bis 5, **dadurch gekennzeichnet, daß** die zu untersuchenden Teilchen an zwei oder mehr Stellen gleichzeitig in die laminare Strömung eingebracht werden.

8. Vorrichtung zur Durchführung einer Durchflußlichtstreuung nach einem der Ansprüche 1 bis 7, umfassend eine Lichtquelle (1), eine Durchflußzelle (3), in der zu untersuchende Teilchen (15) in einem flüssigen Medium mit einem Primärstrahl (9) aus der Lichtquelle (1) bestrahlt werden und das Licht streuen und Mittel (4) zur Bestimmung und Auswertung des von den Teilchen (15) in der Durchflußzelle (3) gestreuten Lichts, **dadurch gekennzeichnet, daß** sie Mittel (11, 12, 13) umfaßt, die in der Durchflußzelle (3) eine laminare Strömung eines flüssigen Mediums erzeugen können, das die zu untersuchenden Teilchen (15) nicht aufweist und Mittel (14) umfaßt, mit denen die zu untersuchenden Teilchen (15) in die laminare Strömung eingebracht werden können.

9. Vorrichtung nach Anspruch 8, **dadurch gekennzeichnet, daß** die Mittel (11, 12, 13), die in der Durchflußzelle eine laminare Strömung eines flüssigen Mediums erzeugen können, eine Fritte, ein Sieb, eine mikroporöse Folie, eine Lochplatte und/oder einen Wabenkörper umfassen, die am Eintrittspunkt des flüssigen Mediums und/oder am Austrittspunkt des flüssigen Mediums die Durchflußzelle abschließt.

10. Vorrichtung nach Anspruch 8 oder 9, **dadurch gekennzeichnet, daß** die Durchflußzelle in Richtung parallel zu dem Primärstrahl (9) einen Innendurchmesser im Bereich von 3 bis 30 mm aufweist.

11. Vorrichtung nach einem der Ansprüche 8 bis 10, **dadurch gekennzeichnet, daß** die Mittel (14), mit denen die zu untersuchenden Teilchen in die laminare Strömung eingebracht werden können, eine Kapillare umfassen.

12. Vorrichtung nach Anspruch 11, **dadurch gekennzeichnet, daß** die Kapillare einen Innendurchmesser im Bereich von 0,05 bis 1,0 mm aufweist.

13. Vorrichtung nach Anspruch 11 oder 12, **dadurch gekennzeichnet, daß** die Kapillare am Austrittspunkt strömungsverbessernd geformt ist.

14. Vorrichtung nach einem der Ansprüche 8 bis 13, **dadurch gekennzeichnet, daß** die Mittel (14), mit denen die zu untersuchenden Teilchen in die laminare Strömung eingebracht werden können, derart ausgestaltet sind, daß die zu untersuchenden Teilchen an zwei oder mehreren Stellen parallel in die laminare Strömung eingebracht werden können.

15. Durchflußzelle zur Verwendung in einem Verfahren nach einem der Ansprüche 1 bis 7, **dadurch gekennzeichnet, daß** sie Mittel (11, 12, 13) umfaßt, die in der Durchflußzelle eine laminare Strömung eines flüssigen Mediums erzeugen können, das die zu untersuchenden Teilchen nicht enthält.

16. Durchflußzelle nach Anspruch 15, **dadurch gekennzeichnet, daß** die Mittel (11, 12, 13), die in der Durchflußzelle eine laminare Strömung eines flüssigen Mediums erzeugen können, eine oder mehrere Fritten, Siebe, mikroporöse Folien und/oder Wabenkörper umfassen.
